# FASCICULE DE BREVET EUROPEEN

(11) **EP 0 453 360 B1**
(45) Date de publication et mention de la délivrance du brevet: **12.10.1994**
(21) Numéro de dépôt: 91401010.3
(22) Date de dépôt: 17.04.1991
(51) Int. Cl.: F02C 7/00, F02C 7/20, F02K 3/072

(54) **Moteur d'aviation à très grand taux de dilution et du type dit contrafan avant**
Flugzeugtriebwerk mit hohem Nebenstromverhältnis und mit gegenläufigem Frontbläsertriebwerk
Aviation engine with high bypass ratio and of the type with front contra-rotating fan

(30) Priorité: 19.04.1990 FR 9004991
(43) Date de publication de la demande: 23.10.1991
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Bart, Jacques René, F-91000 Evry (FR)
(74) Mandataire: Berrou, Paul

(56) Documents cités:
- EP-A- 0 314 568
- FR-A- 2 309 402
- FR-A- 2 379 433
- FR-A- 2 560 854
- US-A- 4 037 809
- AVIATION WEEK AND SPACE TECHNOLOGY. 28 juin 1982, NEW YORK US pages 51 - 56; D.E. FINK: "Powerplants of Next Century Studied"

## Description

La présente invention concerne l'accrochage des groupes turboréacteurs, à très grand taux de dilution et du type contrafan avant, sous les ailes d'avions et les nacelles adaptées pour ce faire.

Elle concerne plus particulièrement une nacelle pour suspendre sous l'aile d'un avion, à l'aide d'un mât de suspension, un groupe turboréacteur à double flux et à très haut taux de dilution du type dit contrafan avant comportant des soufflantes carénées à hélices contrarotatives, disposées à l'avant du groupe turboréacteur, et des bras radiaux redresseurs disposés à l'arrière des hélices et s'étendant radialement vers l'extérieur à partir du carter moteur, ladite nacelle comportant de façon connue, un capotage intérieur, de forme généralement cylindrique entourant le carter moteur et formant la paroi interne de la veine de flux froid, et un capotage extérieur, lui aussi de forme générale cylindrique, dont le bord interne forme la paroi externe de la veine de flux froid et dont le bord externe forme l'enveloppe de la nacelle.

Il est connu d'accrocher des turboréacteurs à double flux à soufflante avant sous les ailes d'un avion, à l'extrémité d'un mât suspendu à l'aile. Un tel exemple est montré dans le document FR-A-2 560 854. Dans ce document, le carter de la soufflante est fixé au carter moteur par des entretoises et le carter moteur est fixé par deux points d'attache au mât de l'avion, le premier point d'attache étant situé à l'avant du carter moteur et l'autre à l'arrière de ce même carter moteur. Dans cette disposition le mât d'avion comporte une partie inférieure qui s'étend longitudinalement et verticalement dans la veine du flux d'air froid brassé par la soufflante, ce qui entraîne en fonctionnement en vol une traînée indésirable.

De plus, le carter de la soufflante, qui est solidaire du capotage extérieur du turboréacteur empêche un accès aisé aux dispositifs d'accrochage du groupe turboréacteur lors de la pose et de la dépose du turboréacteur.

Le brevet US-A-4 037 809 décrit une nacelle pour moteur à double flux classique dans lequel le carter de la soufflante est solidaire du carter moteur et est fixé au mât par des moyens de fixation, et dans lequel la partie arrière du capotage extérieur est séparable du carter de soufflante et est montée sur le mât d'avion de manière à pouvoir coulisser vers l'arrière lors de la maintenance au sol. Cette disposition appliquée à un turboréacteur à très grand taux de dilution du type contrafan avant ne permettrait pas d'avoir un accès facile aux hélices contrarotatives, ni au réducteur entraînant les hélices par suite de la solidarisation du carter de la soufflante au carter moteur. De plus l'accouplement de la partie arrière du capotage extérieur sur le carter de soufflante nécessite une bande de jonction spéciale de section trapézoïdale.

Le document FR-A-2 622 507 concerne un mode d'accrochage sous l'aile d'un avion d'un turboréacteur à double flux et à très haut taux de dilution du type dit contrafan arrière, dans lequel le groupe turboréacteur est suspendu par un mât comportant deux bras disposés dans un plan vertical contenant l'axe longitudinal du groupe turboréacteur, dont les extrémités supérieures sont solidaires d'un caisson structural de l'aile et les extrémités inférieures sont solidaires d'un palonnier d'axe longitudinal disposé entre le carter moteur et le capotage intérieur. Le groupe turboréacteur est accroché au palonnier par l'extrémité amont de celui-ci sur le carter moteur au droit des aubes directrices d'entrée et par l'extrémité aval de celui-ci sur la structure de transition disposée entre la turbine basse pression et les turbines libres entraînant les bélices contrarotatives. Dans cette disposition les deux bras de suspension sont également disposés dans la veine du flux d'air froid et entraînent une traînée indésirable. La maintenance au sol est facilitée par le fait que le capotage extérieur de la nacelle est accroché au mât de suspension avion ou au caisson structural de l'aile au moyen de potences transversales et ce capotage est séparé circulairement en trois secteurs de 120°, le secteur supérieur étant intégré à la structure de l'aile et les deux secteurs latéraux du capotage extérieur comportant des capots mobiles pouvant se relever latéralement autour de charnières longitudinales d'articulation fixées sur le secteur supérieur et pouvant se verrouiller entre eux en partie basse. La rigidification de ce capotage extérieur ouvrable est obtenue grâce à des bras structuraux radiaux montés à l'avant et à l'arrière de la nacelle. Ces bras sont solidaires du carter moteur et traversent le flux d'air froid, ce qui entraîne une traînée supplémentaire indésirable.
Le but de la présente invention est de proposer une nacelle du type mentionné qui pallie les inconvénients cités, et qui permette entre autres, de diminuer la traînée, et de diminuer le temps de pose et de dépose du groupe turboréacteur.
Le but est atteint selon l'invention par le fait que :
a) le capotage extérieur de la nacelle comporte trois parties :
   un capot amont formant la partie amont de la nacelle et entourant les hélices des soufflantes, ledit capot amont étant solidaire du mât de suspension et pouvant s'ouvrir pour faciliter les travaux de maintenance,
   un capot intermédiaire structural, situé à l'arrière du capot amont et solidaire du carter moteur par l'intermédiaire des bras radiaux redresseurs, et
   un capot aval situé à l'arrière du capot intermédiaire supportant les éléments de l'inverseur de poussée et solidaire du mât de suspension, ledit capot aval pouvant également s'ouvrir pour faciliter les travaux de maintenance,
b) le groupe turboréacteur est accroché au mât de suspension par deux points d'attache, le premier point d'attache étant prévu dans la partie supérieure du capot intermédiaire et le deuxième point d'attache étant prévu dans la partie arrière du carter moteur,
c) le capot amont et le capot aval, sont solidarisés au capot intermédiaire par des moyens d'accouplement, lorsque le groupe turboréacteur est accroché au mât de suspension et les capots amont et aval sont fermés.

Grâce à cette disposition, seule une faible partie du mât de suspension, celle située au voisinage du point d'attache arrière, se trouve dans la veine de flux froid. En fonctionnement, le capot amont et le capot aval sont accouplés au capot intermédiaire qui est très rigide. il n'est plus nécessaire de prévoir des bras radiaux supplémentaire de rigidification de l'art antérieur qui entraînent une traînée supplémentaire et des difficultés d'accès aux points d'attache, lors de la pose et de la dépose du turboréacteur. La possibilité d'ouverture du capot amont permet d'avoir facilement accès aux hélices contrarotatives et au réducteur entraînant ces hélices. La dépose de ces hélices situées à l'avant est aisée. L'accès au point d'attache avant situé au-dessus du capot intermédiaire peut alors se faire par l'avant et par l'arrière, le capot amont et le capot aval étant ouverts et les hélices contrarotatives étant déposées. L'accès au point d'attache arrière est possible, dès l'ouverture du capot aval.
D'autre caractéristiques et avantages de l'invention apparaîtront à la lecture de la description suivante faite en référence au dessin annexé dans lequel :
la figure 1 est une vue en coupe longitudinale axiale d'un groupe turboréacteur du type dit contrafan avant, selon l'invention, et de sa nacelle,
la figure 2a montre à plus grande échelle le mode d'accouplement du capot amont et du capot intermédiaire,
la figure 2b montre à plus grande échelle le mode d'accouplement du capot aval et du capot intermédiaire,
la figure 3 représente une vue de face du groupe turboréacteur suspendu sous l'aile de l'avion, les carènes mobiles du capotage extérieur de la nacelle étant ouvertes,
la figure 4 est une coupe suivant la ligne IV-IV de la figure 1 montrant le capot aval en position ouverte,
la figure 5 représente, vue de l'avant, le capot intermédiaire étant désolidarisé du mât d'avion, et montré selon le plan V-V de la figure 1,
La figure 6 représente une coupe longitudinale du groupe turboréacteur déposé,
la figure 7 montre la partie basse des carènes mobiles du capot amont ou du capot aval et le dispositif de fermeture de ces carènes mobiles, et
la figure 8 montre l'articulation des carènes mobiles du capot amont sur le secteur supérieur dudit capot amont.

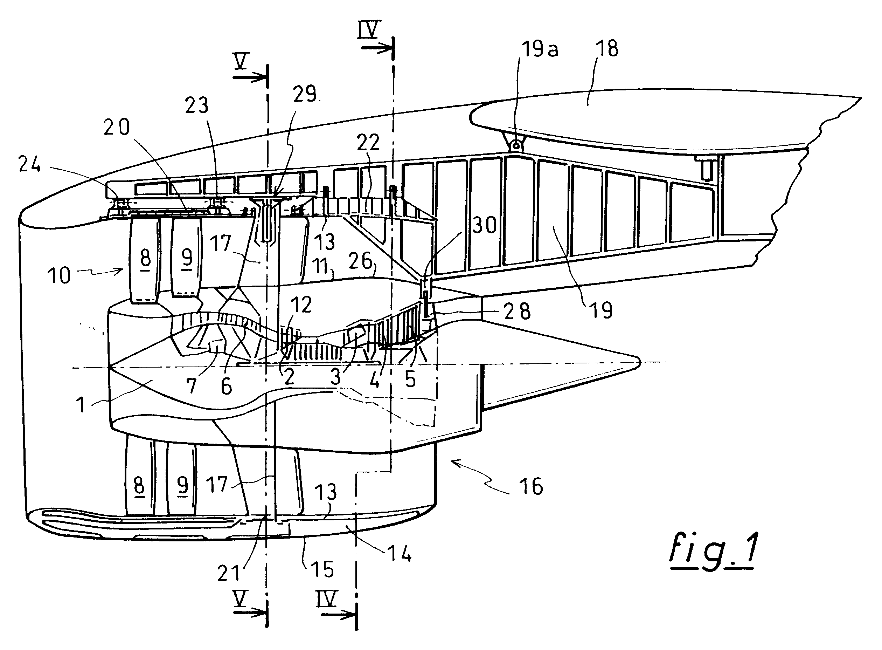

La figure 1 montre une coupe schématique d'un turboréacteur 1 comportant un générateur de gaz composé d'un compresseur haute pression 2 délivrant de l'air comprimé à une chambre de combustion annulaire 3 où il est mélangé à du carburant, ce mélange étant brûlé pour être détendu et fournir une partie de l'énergie ainsi accumulée à une turbine haute pression 4 entraînant le compresseur 2. A l'arrière de la turbine haute pression 4 est disposée une turbine basse pression 5 qui reçoit l'énergie de l'air issu de la turbine haute pression 4 et qui entraîne un compresseur à basse pression 6 situé à l'avant du compresseur haute pression 2, ainsi qu'un réducteur 7 entraînant lui-même deux hélices contrarotatives 8 et 9 disposées à l'avant du groupe turboréacteur 1, et qui brassent de l'air froid dans une veine annulaire secondaire 10 qui entoure un capotage intérieur 11 de forme générale cylindrique. Le capotage intérieur 11 est disposé lui-même autour du carter moteur 12. La veine secondaire 10, intérieurement délimitée par ce capotage intérieur 11, est extérieurement délimitée par le bord interne 13 d'un capotage extérieur 14 dont le bord externe 15 forme l'enveloppe de la nacelle 16. Des bras radiaux redresseurs 17 sont disposés à l'arrière des hélices contrarotatives 8 et 9. Ces bras radiaux redresseurs 17 s'étendent vers l'extérieur à partir de la portion du carter moteur 12 située au voisinage des compresseurs haute pression 2 et basse pression 6, et ils traversent la veine annulaire secondaire 10.
Ce groupe turboréacteur 1, à très haut taux de dilution, est du type dit contrafan avant.

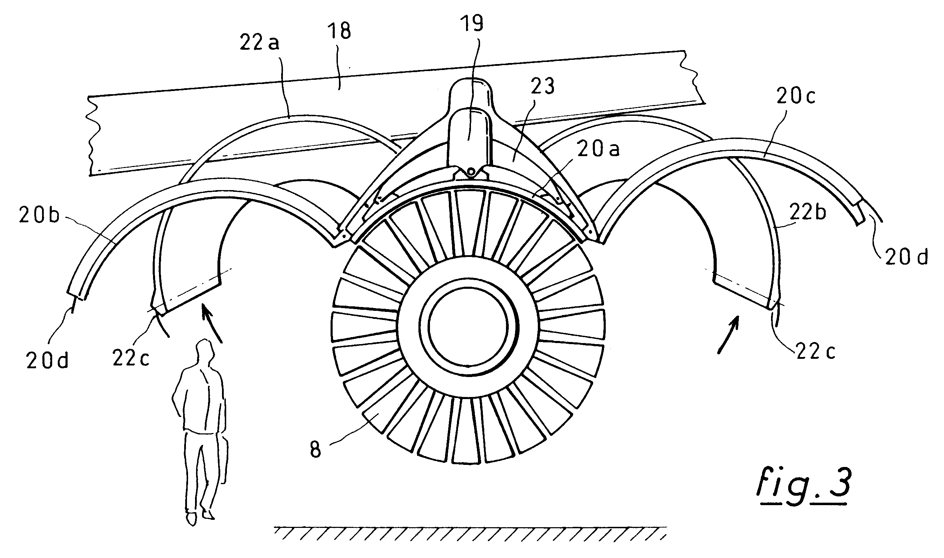

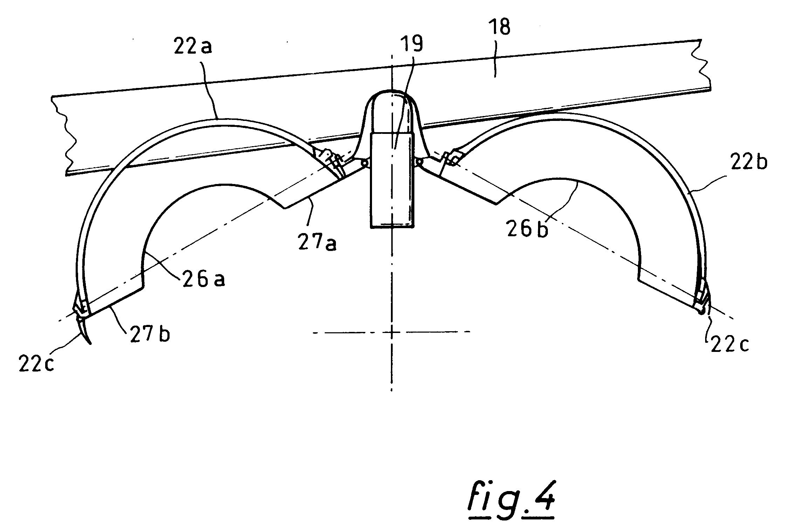

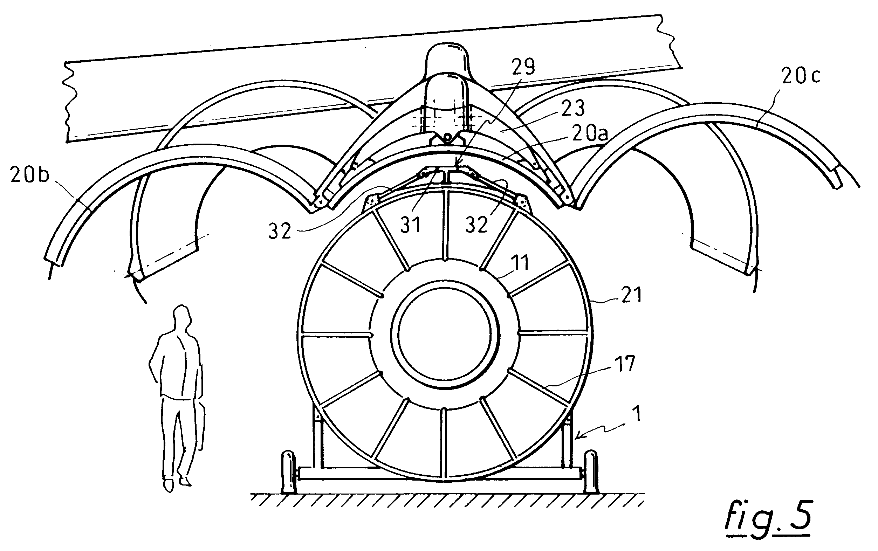

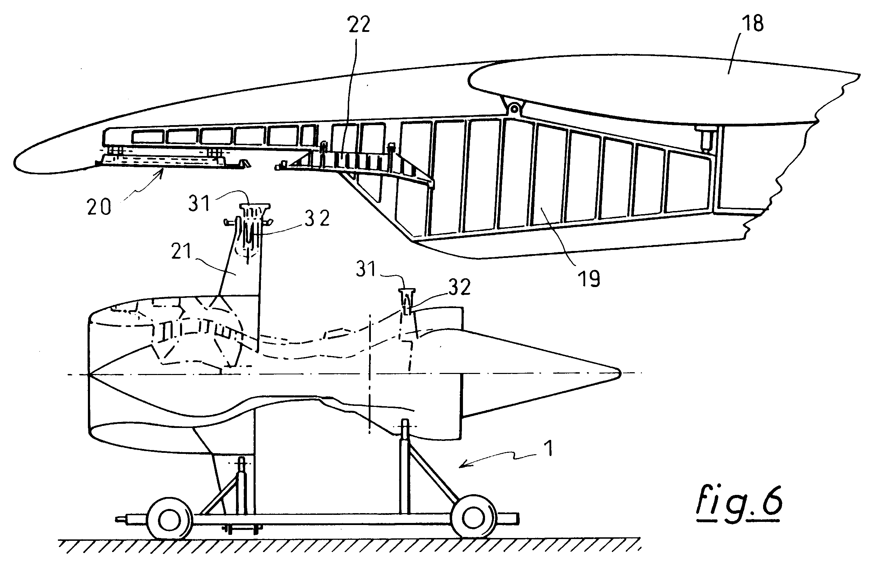

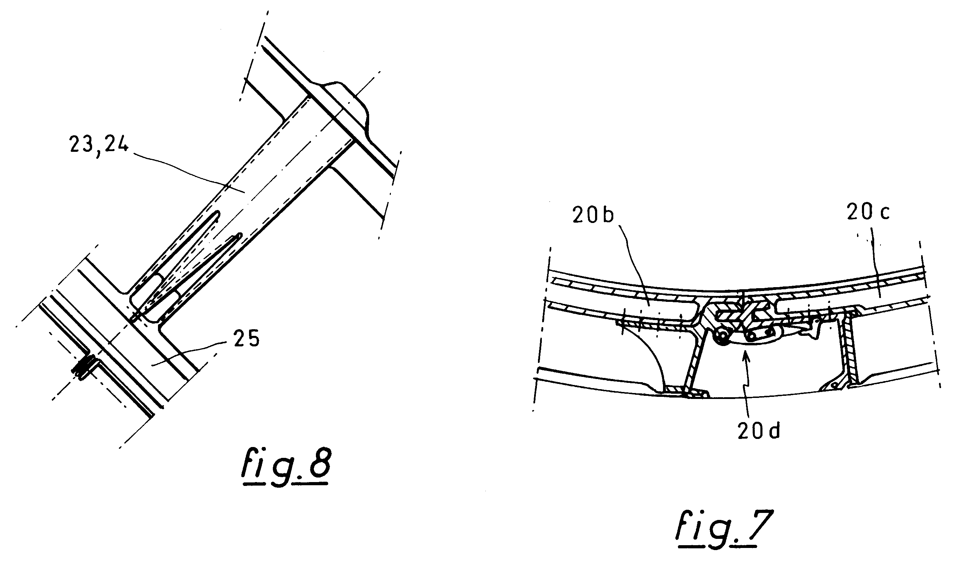

Le fonctionnement du groupe turboréacteur 1 étant ainsi succinctement décrit, son accrochage sous l'aile 18 d'un avion ainsi que la réalisation du capotage extérieur 14 vont être explicités en référence à l'ensemble des figures 1 à 8.
Un mât de suspension 19 est suspendu à la poutre structurelle de l'aile 18 au moyen d'axes 19a et d'une structure d'accrochage de type commun.
Comme on le voit clairement sur le dessin le capotage extérieur 14 de la nacelle 16 comporte de l'avant vers l'arrière : un capot amont 20 formant la partie avant de la nacelle 16 et entourant les hélices contrarotatives 8 et 9, un capot intermédiaire 21 solidaire du carter moteur 12 par l'intermédiaire des bras radiaux redresseurs 17 et un capot aval 22 situé à l'arrière de la nacelle 16 et portant les dispositifs d'inversion de poussée non représentés sur le dessin.
Le capot intermédiaire 21 fait partie intégrante du groupe turboréacteur 1. Le capot amont 20 et le capot aval 22 sont au contraire solidaires du mât de suspension 19 et ils sont séparés circulairement en plusieurs secteurs carénés de telle manière que ces capots soient ouvrables pour faciliter la maintenance au sol du turboréacteur 1, et notamment la pose on la dépose du moteur. Le capot amont 20 est ainsi séparé en trois secteurs 20a, 20b et 20c de 120° chacun. Le secteur supérieur 20a est symétrique par rapport au plan vertical longitudinal passant par l'axe du turboréacteur 1. Il est solidarisé au mât de suspension 19 à sa partie supérieure par des potences transversales 23 et 24, en forme de porte-manteaux, disposées respectivement à l'avant et à l'arrière du secteur supérieur 20a. Les deux secteurs inférieurs 20b et 20c forment des carènes mobiles qui sont articulées par leurs bords supérieurs sur des ferrures 25 solidaires des extrémités des potences transversales 23 et 24, lesdites ferrures 25 formant les bords longitudinaux du secteurs supérieur 20a. Au moyen de charnières d'articulation, les deux carènes mobiles 20b et 20c peuvent s'ouvrir vers le haut afin de permettre un accès aisé au moteur ou se fermer et être verrouillées en leurpartie basse par un moyen de verrouillage de type connu 20d.
Le capot aval 22 est quant à lui séparé en deux secteurs carénés 22a et 22b, en forme de demi-cylindre qui sont articulés sur le mât de suspension 19 par leur bord supérieur et qui peuvent s'ouvrir vers l'extérieur ou se fermer en leur partie basse par un moyen de verrouillage de type connu 22c.
La virole arrière 26 du capotage intérieur 11 peut avantageusement être réalisée en deux parties demi-cylindriques 26a et 26b chaque partie 26a ou 26b étant solidarisée à l'une des carènes mobiles 22a ou 22b, comme le montre la figure 4, par des bras radiaux 27a et 27b.
L'ouverture des deux carènes mobiles 22a et 22b formant le capot aval 22 entraîne par le fait même l'ouverture de la partie arrière du capotage intérieur 11, ce qui dégage la partie arrière 28 du carter moteur 12, qui n'est autre que le carter d'échappement de celui-ci.
Le groupe turboréacteur 1 est fixé au mât de suspension 19 par deux points d'attache 29 et 30, le premier point d'attache 29 étant situé au dessus du capot intermédiaire 21 et le deuxième point d'attache 30 étant situé immédiatement au-dessus de la partie arrière 28 du carter moteur 12. Comme on le voit plus clairement sur les figures 5 et 6, chaque point d'attache est formé par une platine amovible 31 qui peut être fixée sur le mât de suspension 19 de manière connue à l'aide de moyens de fixation. Ces deux platines amovibles 31 sont reliées, également de manière connue, respectivement au capot intermédiaire 21 et au carter d'échappement 28 par des biellettes de suspension 32 qui sont nécessaires pour reprendre les efforts circonférentiels, la poussée axiale du moteur et le poids de ce dernier. Lorsque le groupe turboréacteur 1 est accroché au mât de suspension 19 en ses deux points d'attache 29 et 30, et lorsque le capot amont 20 et le capot aval 22 sont fermés, ces deux derniers capots 20 et 22 sont accouplés rigidement au capot intermédiaire 21 respectivement par des moyens d'accouplement 32a et 32b disposés à chaque extrémité du capot intermédiaire 21.

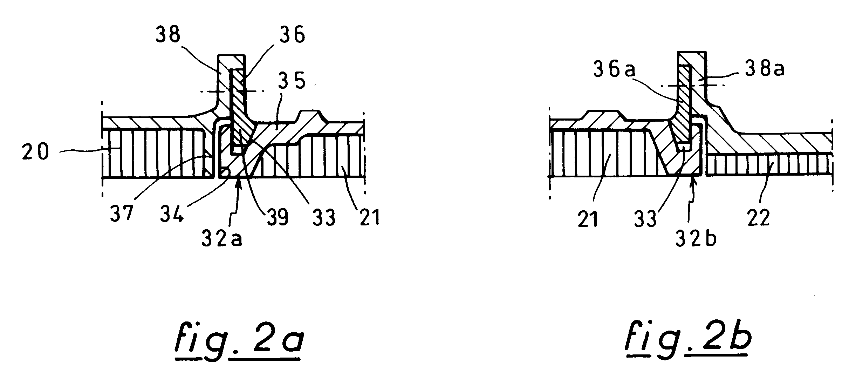

Comme on le voit sur la figure 2a, qui montre à grande échelle les moyens d'accouplement 32a du capot amont 20 et du capot intermédiaire 21, le capot intermédiaire 21 présente une rainure annulaire 33 près de sa face d'extrémité avant 34. Cette rainure annulaire 33 est ouverte du côté de la face cylindrique externe 35 du capot intermédiaire 21, et elle présente une section axiale de forme conique qui s'évase vers l'extérieur. Cette rainure annulaire est destinée à loger la partie de plus faible diamètre d'un anneau 36 qui est solidaire du capot amont 20 et qui est disposé à l'arrière de la face d'extrémité arrière 37 du capot amont 20, cette face d'extrémité arrière 37 étant en regard de la face d'extrémité avant 34 du capot intermédiaire 21. A cet effet le capot amont 20 présente près de sa face d'extrémité arrière 37 une bride 38 qui s'étend vers l'extérieur et l'arrière du capot amont 20 et qui entoure l'extrémité avant du capot intermédiaire 21. L'anneau 36 est fixé sur cette bride 38 par boulonnage par exemple. Etant donné que le capot amont 20 est séparé circulairement en trois secteurs 20a, 20b et 20c, la bride 38 et l'anneau 36 sont également découpés en trois secteurs, les parties sectorielles de l'anneau 36 étant toutes fixées sur les parties sectorielles correspondantes des brides 38 et formant des mâchoires dont la partie interne 39 située du côté de l'axe du turboréacteur coopère avec la rainure annulaire 33 pour accoupler les deux capots 20 et 21.
La section de la partie interne 39 est également conique et compatible avec la section axiale de la rainure annulaire 33.

L'accouplement 32b du capot intermédiaire 21 et du capot aval 22, montré à grande échelle sur la figure 2b est réalisé de la même manière que l'accouplement 32a. La seule différence réside dans le fait que le capot aval 22 étant réalisé en deux coquilles 22a et 22b, l'anneau 36a et la bride 38a correspondants sont réalisés en deux secteurs.
On conçoit aisément que lorsque le capot amont 20 est ouvert, les hélices contrarotatives 8 et 9 sont accessibles. Elles peuvent être alors déposées, ce qui permet d'avoir un accès facile au réducteur 7. Si en plus on ouvre le capot aval 21, les moyens de fixation de la platine 31 du point d'attache avant 29 sont accessibles à la fois par l'avant et par l'arrière du capot intermédiaire 21, et les moyens de fixation de la platine 31 du point d'attache arrière 30 sont également accessibles par l'avant et par l'arrière du fait que les parties 26a et 26b de la virole arrière 26 du capotage intérieur 11 sont solidarisées au capot aval 22. Les figures 5 et 6 montrent le moteur déposé sur un chariot 40 disposé sous le turboréacteur 1 et prévu pour recevoir le moteur. L'accrochage du groupe turboréacteur sur le mât de suspension 19 est réalisé par le cheminement inverse.

## Revendications

1. Nacelle pour suspendre sous l'aile (18) d'un avion, à l'aide d'un mat de suspension (19), un groupe turboréacteur double flux (1) à très haut taux de dilution du type dit contrafan avant comportant deux soufflantes carénées à hélices contrarotatives (8, 9), disposées à l'avant du groupe turboréacteur (1) et des bras radiaux redresseurs (17) disposés à l'arrière des hélices (8, 9) et s'étendant radialement vers l'extérieur à partir du carter moteur (12),
ladite nacelle (16) comportant un capotage intérieur (11), de forme générale cylindrique entourant le carter moteur (12) et formant la paroi interne de la veine de flux froid (10), et un capotage extérieur (14) lui aussi de forme générale cylindrique dont le bord interne (13) forme la paroi externe de la veine de flux froid (10) et dont le bord externe (15) forme l'enveloppe de la nacelle (16), caractérisé en ce que :
a) le capotage extérieur (14) de la nacelle (16) comporte trois parties :
un capot amont (20) formant la partie amont de la nacelle (16) et entourant les hélices (8, 9) des soufflantes, ledit capot amont (20) étant solidaire du mât de suspension (19) et pouvant s'ouvrir pour faciliter les travaux de maintenance,
un capot intermédiaire structural (21) situé à l'arrière du capot amont (20) et solidaire du carter moteur (12) par l'intermédiaire des bras radiaux redresseurs (17), et un capot aval (22) situé à l'arrière du capot intermédiaire (21) supportant les éléments de l'inverseur de poussée et solidaire du mât de suspension (19), ledit capot aval (22) pouvant également s'ouvrir pour faciliter les travaux de maintenance,
b) le groupe turboréacteur (1) est accroché au mât de suspension (19) par deux points d'attache (29, 30) le premier point d'attache (29) étant prévu dans la partie supérieure du capot intermédiaire (21) et le deuxième point d'attache (30) étant prévu dans la partie arrière (28) du carter moteur (12),
c) le capot amont (20) et le capot aval (22) sont solidarisés au capot intermédiaire (21) par des moyens d'accouplement (32a, 32b), lorsque le groupe turboréacteur (1) est accroché au mât de suspension (19) et lorsque le capot amont (20) et le capot aval (22) sont fermés.

2. Nacelle selon la revendication 1 dans laquelle le premier point d'attache (29) est formé par une première platine amovible (31) fixée sur le mât de suspension (19), ladite première platine (31) étant reliée au capot intermédiaire (21) par des biellettes de suspension (32).

3. Nacelle selon l'une quelconque des revendications 1 et 2 dans laquelle le deuxième point d'attache (30) est formé par une deuxième platine amovible (31) fixée sur le mât de suspension (19), ladite deuxième platine (31) étant reliée au carter moteur (12) par des biellettes de suspension (32).

4. Nacelle selon l'une quelconque des revendications 1 à 3, caractérisée en ce que les capots ouvrables (20, 22) -le capot amont (20) et le capot aval (22)- sont séparés circulairement en plusieurs secteurs (20a, 20b, 20c, 22a, 22b) et en ce que les moyens d'accouplement (32a, 32b) du capot intermédiaire (21) et de l'un quelconque desdits capots ouvrables (20, 22) comportent une rainure annulaire (33), ouverte du côté de la face cylindrique externe (35) du capot intermédiaire (21) et prévue près de la face d'extrémité (34) de celui-ci, voisine du capot ouvrable correspondant (20, 22) et une pluralité de mâchoires formant un anneau (36, 36a) dont la partie de plus faible diamètre (39) coopère avec ladite rainure (33), lorsque le groupe turboréacteur (1) est accroché au mât de suspension (19) et ledit capot ouvrable (20, 22) est fermé, chaque mâchoire étant montée en porte à faux sur la face d'extrémité (37) d'un secteur (20a, 20b, 20c, 22a, 22b) dudit capot ouvrable (20, 22).

5. Nacelle selon la revendication 4 caractérisée en ce que le capot amont (20) est séparé circulairement en trois secteurs de 120°, (20a, 20b, 20c) le secteur supérieur (20a) étant symétrique par rapport au plan vertical passant par l'axe du groupe turboréacteur et étant fixé au mât de suspension (19) au moyen de potences transversales (23, 24).

6. Nacelle selon la revendication 5 caractérisée en ce que les deux secteurs latéraux (20b, 20c) du capot amont (20) constituent des carènes mobiles pouvant se relever latéralement autour de charnières longitudinales d'articulation fixées sur le secteur supérieur (20a) et pouvant se verrouiller entre eux en partie basse (20d).

7. Nacelle selon l'une quelconque des revendications 4 à 6, caractérisée en ce que le capot aval (22) comporte deux secteurs structuraux carénés (22a, 22b) et articulés sur le mât de suspension (19).

## Claims

1. A pod for suspending below an aircraft wing (1) by means of a pylon (19) a very high bypass ratio turbojet engine unit (1) of the front counterrotating fan kind and comprising two faired fans having counterrotating impellers (8, 9) in front of the engine unit (1) and radial flow straighteners (17) which are disposed behind the impellers (8, 9) and extend radially outwards from the engine casing (12), the pod (16) comprising: a generally cylindrical inner cowling (11) which extends around the engine casing (12) and serves as the inner wall for the cold air flow (10); and an outer cowling (14) which is also of generally cylindrical shape and whose inner edge (13) serves as the outer wall for the cold air flow (10) and whose outer edge (15) serves as the envelope of the pod (16), characterised in that:
(a) the outer cowling (14) of the pod (16) is in three parts, namely:
an upstream cowl (20) which serves as the upstream part of the pod (16), extends around the fan impellers (8, 9), is rigidly secured to the pylon (19) and is openable to facilitate maintenance work;
an intermediate structural cowl (21) which is disposed behind the upstream cowl (20) and is rigidly secured to the engine casing (12) by way of the radial flow straighteners, and
a downstream cowl (22) which is disposed behind the intermediate cowl (21), carries the thrust reverser elements, is rigidly secured to the pylon (19) and is also openable to facilitate maintenance work;
(b) the engine unit (1) is connected to the pylon (19) by two connections (29, 30), the first connection (29) being disposed in the top part of the intermediate cowl (21), the second connection being disposed in the rear part (28) of the engine casing (12);
(c) when the engine unit (1) is in engagement with the pylon (19) and the upstream cowl (20) and downstream cowl (22) are in the closed state, the upstream cowl (20) and the downstream cowl (22) are rigidly secured to the intermediate cowl (21) by coupling means (32a, 32b).

2. A pod according to claim 1 wherein the first connection (29) is embodied by a first detachable plate (31) secured to the pylon (19) and connected by hangers (32) to the intermediate cowl (21).

3. A pod according to claim 1 or 2 wherein the second connection (30) is embodied by a second detachable plate (31) secured to the pylon (19) and connected by hangers (32) to the engine casing (12).

4. A pod according to any of claims 1 to 3, characterised in that the openable cowls (20, 22) - the upstream cowl (20) and the downstream cowl (22) - are divided circle-wise into a number of sectors (20a, 20b, 20c, 22a, 22b) and the coupling means (32a, 32b) of the intermediate cowl (21) and any one of the openable cowls (20, 22) are formed with an annular groove (33) which is open towards the outer cylindrical face (35) of the intermediate cowl (21) and disposed near that end face (34) thereof which is adjacent the corresponding openable cowl (20, 22), the coupling means (32a, 32b) comprising a number of jaws forming a ring (36,36a) whose narrowest-diameter part (39) co-operate with the groove (33) when the engine unit (1) is connected to the pylon (19) and the openable cowl (20, 22) is in the closed state, each jaw overhanging the end face (37) of a sector (20a, 20b, 20c, 22a, 22b) of the openable cowl (20, 22).

5. A pod according to claim 4, characterised in that the upstream cowl (20) is divided circle-wise into three 120° sectors (20a, 20b, 20c), the top sector (20a) being symmetrical of the vertical plane passing through the engine axis and being secured to the pylon (19) by means of transverse brackets (23, 24).

6. A pod according to claim 5, characterised in that the two lateral sectors (20b, 20c) of the upstream cowl (20) are in the form of movable fairings raisable around longitudinal hinges secured to the top sector (20a) and lockable with one another at the bottom (20d).

7. A pod according to any of claims 4 to 6, characterised in that the downstream cowl (22) has two faired structural sectors (22a, 22b) articulated to the pylon (19).

## Patentansprüche

1. Gondel zur Aufhängung eines Zweikreis-Turboluftstrahltriebwerkaggregats (1) mit sehr großem Nebenstromverhältnis unter dem Flügel (18) eines Flugzeugs mit Hilfe einer Aufhängungsstrebe (19), wobei das Turboluftstrahltriebwerkaggregat ein sogenanntes gegenläufiges Front-Fan-Turboluftstrahltriebwerk ist, das zwei vor dem Turboluftstrahltriebwerkaggregat angeordnete stromlinienförmig verkleidete Gebläse mit gegenläufigen Propellern (8, 9) sowie hinter den Propellern (8, 9) angeordnete radiale Leitschaufelarme (17) aufweist, die sich von dem Motorgehäuse (12) aus radial nach außen erstrecken, wobei die Gondel (16) eine im wesentlichen zylindrische innere Verkleidung (11) aufweist, die das Motorgehäuse (12) umschließt und die innere Wandung für den Strahl des kalten Stroms (10) bildet, sowie eine ebenfalls im wesentlichen zylindrische äußere Verkleidung (14), deren innerer Rand (13) die äußere Wandung für den Strahl des kalten Stroms (10) bildet und deren äußerer Rand (15) die Hülle der Gondel (16) bildet,
**dadurch gekennzeichnet,** daß
a) die äußere Verkleidung (14) der Gondel (16) aus drei Teilen besteht:
einer stromaufwärtigen Haube (20), die den vorderen Teil der Gondel (16) bildet und die Propeller (8,9) der Gebläse umschließt und die fest mit der Aufhängungsstrebe (19) verbunden ist und zur Erleichterung der Wartungsarbeiten geöffnet werden kann,
einer strukturellen mittleren Haube (21), die hinter der stromaufwärtigen Haube (20) liegt und über die radialen Leitschaufelarme (17) mit dem Motorgehäuse (12) fest verbunden ist, und
einer stromabwärtigen Haube (22), die hinter der mittleren Haube (21) liegt und die Elemente der Schubumkehrvorrichtung trägt und mit der Aufhängungsstrebe (19) fest verbunden ist, wobei diese stromabwärtige Haube (22) ebenfalls zur Erleichterung der Wartungsarbeiten geöffnet werden kann,
b) das Turboluftstrahltriebwerkaggregat (1) in zwei Verbindungspunkten (29, 30) mit der Aufhängungsstrebe (19) verhakt ist, wobei der erste Verbindungspunkt (29) in dem oberen Teil der mittleren Haube (21) und der zweite Verbindungspunkt (30) in dem hinteren Teil (28) des Motorgehäuses (12) vorgesehen ist, und
c) die stromaufwärtige Haube (20) und die stromabwärtige Haube (22) durch Kupplungsmittel (32a, 32b) an der mittleren Haube (21) befestigt sind, wenn das Turboluftstrahltriebwerkaggregat (1) mit der Aufhängungsstrebe (19) verhakt ist und die stromaufwärtige Haube (20) und die stromabwärtige Haube (22) geschlossen sind.

2. Gondel nach Anspruch 1, bei der der erste Verbindungspunkt (29) aus einer ersten abnehmbaren Platte besteht, die an der Aufhängungsstrebe (19) befestigt und über Aufhängungsstäbe (32) mit der mittleren Haube (21) verbunden ist.

3. Gondel nach einem der Ansprüche 1 oder 2, bei der der zweite Verbindungspunkt (30) aus einer zweiten abnehmbaren Platte (31) besteht, die an der Aufhängungsstrebe (19) befestigt und über Aufhängungsstäbe (32) mit dem Motorgehäuse (12) verbunden ist.

4. Gondel nach einem der Ansprüche 1 bis 3, dadurch gekennzeichnet, daß die zu öffnenden Hauben (20, 22), d.h. die stromaufwärtige. Haube (20) und die stromabwärtige Haube (22), in mehrere Kreissektoren (20a, 20b, 20c, 22a, 22b) unterteilt sind und daß die Kupplungsmittel (32a, 32b) der mittleren Haube (21) und jeweils einer der zu öffnenden Hauben (20, 22) eine ringförmige Nut (33) umfassen, die auf der Seite der zylindrischen Außenfläche (35) der mittleren Haube (21) offen ist und in der Nähe derjenigen ihrer Stirnseiten (34) vorgesehen ist, die der betreffenden zu öffnenden Haube (20, 22) benachbart ist, sowie eine Vielzahl von Klemmelementen, die einen Ring 36, 36a) bilden, dessen durchmesserkleinster Teil (39) mit der genannten Nut (33) zusammenwirkt, wenn das Turboluftstrahltriebwerkaggregat (1) mit der Aufhängungsstrebe (19) verhakt ist und die zu öffnende Haube (20, 22) geschlossen ist, wobei die einzelnen Klemmelemente freitragend an der Stirnseite (37) eines der Sektoren (20a, 20b, 20c, 22a, 22b) der zu öffnenden Haube (20, 22) montiert ist.

5. Gondel nach Anspruch 4, dadurch gekennzeichnet, daß die stromaufwärtige Haube (20) in drei 120°-Kreissektoren (20a, 20b, 20c) unterteilt ist, wobei der obere Sektor (20a) symmetrisch zu der durch die Achse verlaufenden Vertikalebene des Turboluftstrahltriebwerkaggregats (1) angeordnet und mit Hilfe von transversalen Auslegern (23, 24) an der Aufhängungsstrebe (19) befestigt ist.

6. Gondel nach Anspruch 5, dadurch gekennzeichnet, daß die beiden seitlichen Sektoren (20b, 20c) der stromaufwärtigen Haube (20) bewegliche stromlinienförmige Teile bilden, die um an dem oberen Sektor (20a) befestigte Längsscharniere seitlich hochgerichtet und in dem unteren Teil (20d) miteinander verriegelt werden können.

7. Gondel nach einem der Ansprüche 4 bis 6, dadurch gekennzeichnet, daß die stromabwärtige Haube (22) zwei strukturelle Sektoren (22a, 22b) aufweist, die stromlinienförmig gestaltet und gelenkig mit der Aufhängungsstrebe (19) verbunden sind.
